(19) Europäisches Patentamt / European Patent Office / Office européen des brevets

(11) **EP 4 346 115 A1**

(12) **EUROPEAN PATENT APPLICATION**

(43) Date of publication:
**03.04.2024 Bulletin 2024/14**

(21) Application number: **22199145.8**

(22) Date of filing: **30.09.2022**

(51) International Patent Classification (IPC):
**H04B 7/06** (2006.01)    **H04B 7/08** (2006.01)
**H04W 72/23** (2023.01)    **H04L 5/00** (2006.01)

(52) Cooperative Patent Classification (CPC):
**H04B 7/088; H04B 7/0695; H04L 5/0053**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Panasonic Intellectual Property Corporation of America**
**Torrance, CA 90504 (US)**

(72) Inventors:
• ZEINEDDINE, Khalid
  63225 Langen (DE)
• LI, Hongchao
  63225 Langen (DE)
• SUZUKI, Hidetoshi
  Osaka 571-8501 (JP)

(74) Representative: **Grünecker Patent- und Rechtsanwälte**
**PartG mbB**
**Leopoldstraße 4**
**80802 München (DE)**

(54) **SYSTEM AND METHODS FOR TCI INDICATION FOR MULTIPLE TRP TRANSMISSION**

(57)    The disclosure relates to a user equipment, a base station device, and respective methods for a user equipment and a base station. More specifically, the user equipment comprises a transceiver which, in operation receives an indication for one or more indicated transmission configuration indication, TCI, states; and circuitry which, in operation: obtains one or more TCI state groups for the one or more indicated TCI states, wherein a TCI state group out of the one or more TCI state groups corresponds to one or more spatial directions; and configures one or more transmission occasions for an uplink or downlink transmission channel based on a preconfigured association between TCI state groups and transmission occasions.

UE recieves higher layer configuration from gNB indicating a list of TCI states — S1510

The UE receives on a DL channel a new TCI codepoint further selecting a subset of TCI states from the higher layer configured list for UL and DL transmission — S1520

UE identifies the TCI state groups for the TCI states in the TCI codepoint — S1530

TCI update method: The UE updates the UL and DL spatial directions — S1540

The UE uses TCI state group information alongside other higher layer configuration to map UL or DL transmissions to single TRP or multiple TRP transmission with updated spatial directions — S1550

**Fig. 15**

**Description**

**BACKGROUND**

*1. Technical Field*

The present disclosure relates to transmission and reception of signals in a communication system. In particular, the present disclosure relates to methods and apparatuses for such transmission and reception.

*2. Description of the Related Art*

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

**SUMMARY**

One non-limiting and exemplary embodiment facilitates efficient handling of the configuration of transmission occasions upon receiving new TCI states.

In an embodiment, the techniques disclosed here feature an apparatus (e.g. a user equipment, UE). The apparatus comprises a transceiver and circuitry. The transceiver, in operation receives an indication for one or more indicated transmission configuration indication, TCI, states. The circuitry, in operation: obtains one or more TCI state groups for the one or more indicated TCI states, wherein a TCI state group out of the one or more TCI state groups corresponds to one or more spatial directions; and configures one or more transmission occasions for an uplink or downlink transmission channel based on a pre-configured association between TCI state groups and transmission occasions.

It should be noted that general or specific embodiments may be implemented as a system, a method, an integrated circuit, a computer program, a storage medium, or any selective combination thereof. For instance, an integrated circuit can control a process of a UE or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

**BRIEF DESCRIPTION OF THE FIGURES**

In the following exemplary embodiments are described in more detail with reference to the attached figures and drawings.

**Fig. 1**    shows an exemplary architecture for a 3GPP NR system;

**Fig. 2**    is a schematic drawing that shows a functional split between NG-RAN and 5GC;

**Fig. 3**    is a sequence diagram for RRC connection setup/reconfiguration procedures;

**Fig. 4**    is a schematic drawing showing usage scenarios of Enhanced mobile broadband (eMBB), Massive Machine Type Communications (mMTC) and Ultra Reliable and Low Latency Communications (URLLC);

**Fig. 5**    is a block diagram showing an exemplary 5G system architecture for a non-roaming;

**Fig. 6**    is a block diagram illustrating an exemplary functional structure of a base station and a user equipment;

**Fig. 7**    is a block diagram illustrating an exemplary functional structure of the circuitry handling of TCI state configuration that may be included in the exemplary user equipment of Fig. 6;

**Fig. 8**      is a block diagram illustrating an exemplary functional structure of the TCI state configuration circuitry that may be included in the exemplary base station equipment of Fig. 6;

**Fig. 9**      is a flow chart illustrating exemplary steps performed by a user equipment;

**Fig. 10**     is a flow chart illustrating exemplary steps performed by a network node;

**Fig. 11**     is a schematic drawing illustrating an updating of TCI states according to groups;

**Fig. 12**     is a schematic drawing illustrating an updating of TCI states by replacing current TCI states;

**Fig. 13**     shows an exemplary an association of TCI state groups and lists of TCI states;

**Fig. 14**     shows an exemplary TCI codepoint ordered according to TCI state groups;

**Fig. 15**     is a second exemplary flow chart illustrating exemplary steps performed by a user equipment;

**Fig. 16**     is a second exemplary flow chart illustrating exemplary steps performed by a network node.

## DETAILED DESCRIPTION

*5G NR system architecture and protocol stacks*

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

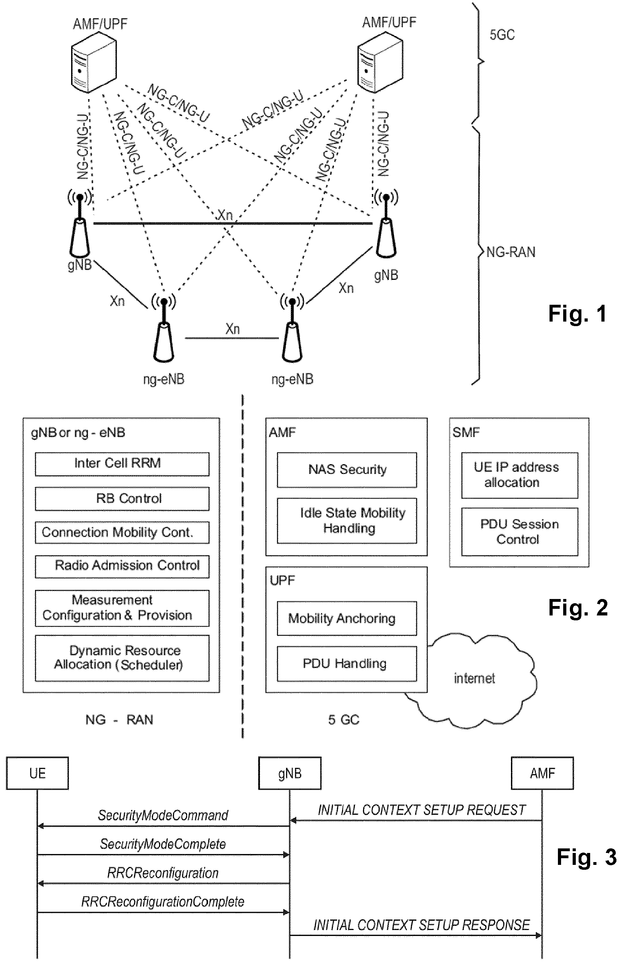

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10$^{-5}$ within 1ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter $\mu$ (in LTE there is only a 15 kHz subcarrier spacing, corresponding to $\mu$ = 0 in NR). The types NR numerology is summarized in 3GPP TS 38.211, v 15.7.0.

*5G NR functional split between NG-RAN and 5GC*

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:

- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from theAMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:

- Non-Access Stratum, NAS, signalling termination;
- NAS signalling security;
- Access Stratum, AS, Security control;

- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:

- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:

- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

*RRC connection setup and reconfiguration procedures*

**Fig. 3** illustrates some interactions between a UE, gNB, and AMF (a 5GC entity) in the context of a transition of the UE from RRC_IDLE to RRC_CONNECTED for the NAS part (see TS 38.300 v15.6.0).
RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a Security-ModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.
In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation *configuration.*

*Usage Scenarios of IMT for 2020 and beyond*

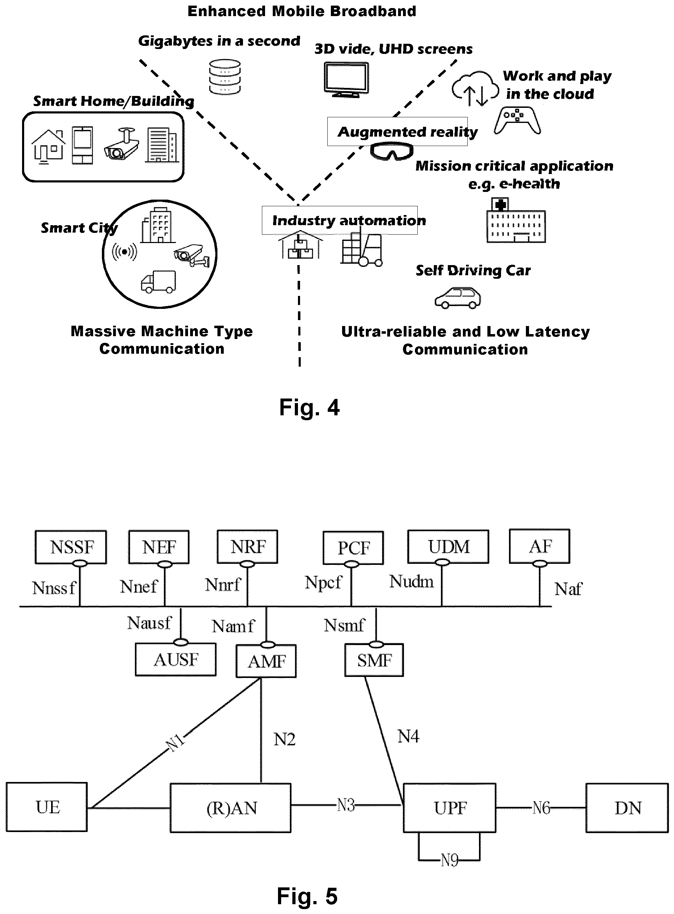

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig.2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to $10^{-6}$ level), higher availability, packet sizes of up to 256 bytes, time synchronization down to the order of a few $\mu s$ where the value can be one or a few $\mu s$ depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

QoS *control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

Fig. 5 illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

*Control Signals*

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sildelink control information (SCI) or the 2nd stage SCI.

*Terminal*

A ***terminal*** or ***user terminal*** or ***user device*** or ***mobile station*** or ***mobile node*** is referred to in the LTE and NR as a ***user equipment (UE).*** This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as IoT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

*Base Station*

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a ***scheduling node*** or ***network node***, e.g. forming a part of the network for providing services to terminals. In particular, a base station may provide wireless access to terminals. Communication between the terminal and the base station is typically standardized and may be defined by different layers, such as PHY, MAC, RRC etc. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term base *station* or *radio base station* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

*Uplink/Downlink/Sidelink*

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

*Data Channels/Control Channels*

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

*Reference Signals*

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

*Time Intervals*

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

*Frequency Bands*

The present disclosure may be applied to any of a licensed band and an unlicensed band.

*Communication*

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

*Antenna Ports*

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

*Downlink control channel monitoring, PDCCH, DCI*

Many of the functions operated by the UE involve the monitoring of a downlink control channel (e.g. the PDCCH, see 3GPP TS 38.300 v15.6.0, section 5.2.3) to receive e.g. particular control information or data destined to the UE.
A non-exhaustive list of these functions is given in the following:

- • a paging message monitoring function,
- • a system information acquisition function,
- • signalling monitoring operation for a Discontinued Reception, DRX, function,
- • inactivity monitoring operation for a Discontinued Reception, DRX, function,
- • random access response reception for a random access function,
- • reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).
Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).
Said DCI formats represent predetermined formats in which respective information is formed and transmitted. In particular, DCI formats 0_1 and 1_1 are used for scheduling PUSCH and PDSCH, respectively, in one cell.
The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.
As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

*Physical Resource Block*

In general, the term *"physical resource block"* (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

*Multiple transmission and reception points*

The physical layer in NR may provide multi-antenna operation such as MIMO (multiple input, multiple output) which may, for instance, include the use of plural or multiple transmission and reception points (multi-TRP). For instance, a user equipment may receive data from plural TRPs (transmission and reception points), wherein the plural-TRPs may be controlled by the same or different network nodes. The terms multi-point transmission or coordinated multi-point transmission (CoMP) may also be used for multi-TRP communication including multi-TRP transmission.
In 3rd generation partnership project (3GPP) in new radio (NR) Rel. 15, basic support for multiple transmission and reception point (multi-TRP) was specified. In NR Rel. 16 multi-TRP may further be enhanced in accordance with a new work item on NR MIMO (cf. RP-182067, 'Revised WID (work item description): Enhancements on MIMO for NR', Samsung, 3GPP TSG RAN (Technical Specification Group Radio Access Network) Meeting #81, Gold Coast, Australia, Sept 10 - 13, 2018).

For instance, multi-TRP operation may be performed by a gNB having different antenna panels or radio heads corresponding to the TRPs and different radio frequency units operating with the respective antennas.

Moreover, in multi-TRP, several options are conceivable with respect to the positional relationship between TRPs, and the distance between two TRPs may vary. For instance, the TRPs may be close, so that a UE receives signals from these TRPs from a similar angle. However, TRPs may also be located at a rather far distance from each other, for instance at remote locations of a network cell. A UE being served by the two TRPs may receive and transmit the signaling from and to the respective TRPs on uncorrelated channels. Accordingly, gains in channel diversity may be optimally utilized.

*Quasi Co-location (QCL)*

According to the definition of QCL in TS38.214 Sec 5.1.5, the UE can be configured with a list of up to *M TCI-State* configurations within the higher layer parameter *PDSCH-Config* to decode PDSCH according to a detected PDCCH with DCI intended for the UE and the given serving cell, where M depends on the UE capability *maxNumberConfiguredTCIstatesPerCC.* Each *TCI-State* contains parameters for configuring a quasi co-location relationship between one or two downlink reference signals and the DM-RS ports of the PDSCH, the DM-RS port of PDCCH or the CSI-RS port(s) of a CSI-RS resource. The quasi co-location relationship is configured by the higher layer parameter *qcl-Type1* for the first DL RS, and *qcl-Type2* for the second DL RS (if configured). For the case of two DL RSs, the QCL types shall not be the same, regardless of whether the references are to the same DL RS or different DL RSs. The quasi co-location types corresponding to each DL RS are given by the higher layer parameter *qcl-Type* in *QCL-Info* and may take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

*Transmission Configuration Indication (TCI) states*

Using a DL channel, the gNB indicates to the UE a list of new (indicated) TCI states. Such indication may be represented by a bit sequence, e.g. a TCI codepoint. A TCI state in such a codepoint may indicated a UL, DL or joint UL/DL (beam correspondence) spatial (transmission) direction.

A list (a subset) of TCI states to activate/deactivate is configured by a bitmap. If a bit in a specific location is set to be '1', it means that it activates the TCI state mapped to the position of the bit. If the bit is set to be '0', it means that it deactivates the TCI state mapped to the position of the bit.

The list of bit position that are set to be '1' is assigned to a small table called codepoint and the max size of the codepoint is 8. It mean that only up to 8 bit fields in this MAC CE can be set to be '1'. The position of '1' bits may be assigned to codepoint in increasing order.

For example, the following fields are set to be '1' and all other bits are set to be '0'.

    T4 = 1
    T10 = 1
    T11 = 1
    T19 = 1
    T25 = 1
    T40 = 1
    T45 = 1
    T50 = 1

Then the codepoint is set to be as follows.

    codepoint 0 = 4
    codepoint 1 = 10
    codepoint 2 = 11

codepoint 3 = 19
codepoint 4 = 25
codepoint 5 = 40
codepoint 6 = 45
codepoint 7 = 50

The TCI in DCI 1_1 indicates this codepoint index.

RRC signaling (from a base station to a UE) is used to configure up to 128 TCI states for the PDSCH and up to 64 TCI states for the PDCCH. All TCI states are deactivated by default after configuration and after a handover.

In DCI format 1-1 (section 7.3.1.2.2 of 3GPP TS 38.212 V15.2.0), which is used for PDSCH scheduling, includes a field called transmission configuration indication (TCI) that is used to indicate one of the eight TCI states using 3 bits, if configured. A UE may be configured with a list of up to M TCI states out of the available TCI states (i.e. the above mentioned 128 or 64 configured TCIs) configured by parameter PDSCH-Config which is configured in the RRC (Radio Resource Control) signaling which is an example of a higher layer signaling in NR. By higher here a layer higher than the physical layer is meant. In the example of the above mentioned DCI format 1-1, M = 8 in correspondence with the maximum number of 3 bits in the TCI field. Each TCI state contains parameters for configuring a quasi co-location relationship between one or two downlink reference signals and the DM-RS ports of the PDSCH. For example, the TCI state has the following format:

```
TCI-State ::= SEQUENCE {
    tci-StateId             TCI-StateId,
    qcl-Type1               QCL-Info,
    qcl-Type2               QCL-Info
    ...
}

QCL-Info ::=              SEQUENCE {
    cell                     ServCellIndex
    bwp-Id                   BWP-Id
    referenceSignal        CHOICE {
        csi-rs                 NZP-CSI-RS-ResourceId,
        ssb                    SSB-Index
    },
    qcl-Type               ENUMERATED {typeA, typeB, typeC, typeD},
    ...
}
```

For example, for a TCI state, two reference signals may be indicated (e.g. RS A and RS B), and these reference signals may be used to derive some channel propagation parameters.

Then a TCI state may be associated with a channel or signal by using thetci-StateId. Such signal/channel is QCLed with RS A and RS B, meaning the same channel propagation parameters may be used for this RS/channel as the ones derived for RS A and RS B.

For downlink, the reference signals in the TCI state may be a CSI-RS or an SSB as the structure above shows.

Further information about the different QCL types and other relevant information can be found in section 5.1.5 of 3GPP TS 38.214 V15.16.0. Accordingly, a single PDCCH (single DCI) has up to 3 bits for TCI signaling to indicate one of the eight configured states that signals the QCL assumption for a TRP and assumes same QCL assumption for other TRPs scheduled by the given PDCCH. With this QCL assumption, the TCI state information that is signaled via DCI is applicable in particular to single TRP transmission, because the same QCL association might not be valid for one different TRPs that are located far apart from each other. Some modifications may facilitate supporting independent TCI state signaling for multiple TRPs using a single PDCCH. For instance, TRPs that are geographically located apart should have a different QCL assumption, hence an independent TCI state signaling for each TRP.

In particular, 3GPP TS 38.214, section 5.1.5 defines, that the UE receives an activation command, as described in clause 6.1.3.14 of [10, TS 38.321], used to map up to 8 TCI states to the codepoints of the DCI field *'Transmission Configuration Indication'*. When the UE would transmit a PUCCH with HARQ-ACK information in slot n corresponding to the PDSCH carrying the activation command, the indicated mapping between TCI states and codepoints of the DCI field *'Transmission Configuration Indication'* should be applied starting from the first slot that is after slot

$$n + 3N_{slot}^{subframe,\mu}$$

where $\mu$ is the SCS configuration for the PUCCH. If *tci-PresentInDCI* is set to "enabled" for the CORESET scheduling the PDSCH, and the time offset between the reception of the DL DCI and the corresponding PDSCH is equal to or greater than *timeDurationForQCL* if applicable, after a UE receives an initial higher layer configuration of TCI states and before reception of the activation command, the UE may assume that the DM-RS ports of PDSCH of a serving cell are quasi co-located with the SS/PBCH block determined in the initial access procedure with respect to 'QCL-TypeA', and when applicable, also with respect to'QCL-TypeD'.

If a UE is configured with the higher layer parameter *tci-PresentInDCI* that is set as 'enabled' for the CORESET scheduling the PDSCH, the UE assumes that the TCI field is present in the DCI format 1_1 of the PDCCH transmitted on the CORESET. If *tci-PresentInDCI* is not configured for the CORESET scheduling the PDSCH or the PDSCH is scheduled by a DCI format 1_0, and the time offset between the reception of the DL DCI and the corresponding PDSCH is equal to or greater than a threshold *timeDurationForQCL* if applicable, where the threshold is based on reported UE capability [13, TS 38.306], for determining PDSCH antenna port quasi co-location, the UE assumes that the TCI state or the QCL assumption for the PDSCH is identical to the TCI state or QCL assumption whichever is applied for the CORESET used for the PDCCH transmission.

If the *tci-PresentInDCI* is set as 'enabled', the TCI field in DCI in the scheduling component carrier points to the activated TCI states in the scheduled component carrier or DL BWP and when the PDSCH is scheduled by DCI format 1_1, the UE shall use the *TCI-State* according to the value of the *'Transmission Configuration Indication'* field in the detected PDCCH with DCI for determining PDSCH antenna port quasi co-location. The UE may assume that the DM-RS ports of PDSCH of a serving cell are quasi co-located with the RS(s) in the TCI state with respect to the QCL type parameter(s) given by the indicated TCI state if the time offset between the reception of the DL DCI and the corresponding PDSCH is equal to or greater than a threshold *timeDurationForQCL,* where the threshold is based on reported UE capability [13, TS 38.306]. When the UE is configured with a single slot PDSCH, the indicated TCI state should be based on the activated TCI states in the slot with the scheduled PDSCH. When the UE is configured with a multi-slot PDSCH, the indicated TCI state should be based on the activated TCI states in the first slot with the scheduled PDSCH, and UE shall expect the activated TCI states are the same across the slots with the scheduled PDSCH. When the UE is configured with CORESET associated with a search space set for cross-carrier scheduling, the UE expects *tci-PresentInDci* is set as 'enabled' for the CORESET, and if one or more of the TCI states configured for the serving cell scheduled by the search space set contains 'QCL-TypeD', the UE expects the time offset between the reception of the detected PDCCH in the search space set and the corresponding PDSCH is larger than or equal to the threshold *timeDurationForQCL.*

For both the cases when *tci-PresentInDCI* is set to 'enabled' and *tci-PresentInDCI* is not configured in RRC connected mode, if the offset between the reception of the DL DCI and the corresponding PDSCH is less than the threshold *timeDurationForQCL,* the UE may assume that the DM-RS ports of PDSCH of a serving cell are quasi co-located with the RS(s) with respect to the QCL parameter(s) used for PDCCH quasi co-location indication of the CORESET associated with a monitored search space with the lowest *controlResourceSetId* in the latest slot in which one or more CORESETs within the active BWP of the serving cell are monitored by the UE. In this case, if the 'QCL-TypeD' of the PDSCH DM-RS is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers). If none of configured TCI states for the serving cell of scheduled PDSCH contains 'QCL-TypeD', the UE shall obtain the other QCL assumptions from the indicated TCI state for its scheduled PDSCH irrespective of the time offset between the reception of the DL DCI and the corresponding PDSCH.

In NR release 15, the TCI-state (transmission configuration indication) for DL, and spatial relation for UL are signaled in DCI per channel/RS. Such signaling may create a signaling overhead, mainly because in many cases, the gNB configures the best beam for all UL/DL channels/RSs. Release 16 beam indication aimed at reducing signaling overhead and latency, by using the TCI state of the PDCCH as a "common beam" to be used as the default beam applied to PDSCH/PUCCH/SRS/PUSCH.

In release 17 NR, for single TRP transmission, a new beam indication scheme, known as the unified TCI (transmission configuration indication) framework, was introduced.

For single TRP transmission, the UE is provided with one joint TCI state (a spatial domain filter that may be used for uplink and downlink) or a pair of separate DL and UL TCI states through a three-step procedure:

1. First the UE is RRC configured (by the base station) with one list of joint or DL TCI states (joint/DL pool) and one list of UL TCI states (UL pool). These TCI states are referred to as the configured TCI states. The first list of joint or DL states can contain 128 TCI states, and the second list can contain 64 UL TCI states as mentioned above.

2. In step 2, a MAC CE (control element) from the base station activates a group of TCI states from the two pools. They are activated in the form of a list of 8 TCI codepoints, as explained above. A codepoint contains one or more configured TCI states. An example of a list of TCI codepoints activated by MAC-CE for a single TRP transmission when RRC *unifiedtci-StateType = joint* is:

| Codepoint # | |
|---|---|
| 0 | (joint/DL TCI 2) |
| 1 | (joint/DL TCI 5) |
| 2 | ((joint/DL TCI 8) |
| 3 | (joint/DL TCI 21) |
| 4 | (joint/DL TCI 33) |
| 5 | (joint/DL TCI 4) |
| 6 | (joint/DL TCI 1) |
| 7 | (joint/DL TCI 9) |

An example of a list of TCI codepoints activated by MAC-CE for single TRP transmission when RRC *unifiedtci-StateType = separate* (i.e. separate TCI states are configured for DL and UL, respectively) is:

| Codepoint # | |
|---|---|
| 0 | (joint/DL TCI 1; UL TCI 3) |
| 1 | (joint/DL TCI 20; UL TCI 7) |
| 2 | (joint/DL TCI 3; UL TCI 17) |
| 3 | (joint/DL TCI 9; UL TCI 5) |
| 4 | (joint/DL TCI 1; UL TCI 8) |
| 5 | (joint/DL TCI 6; UL TCI 13) |
| 6 | (joint/DL TCI 11; UL TCI 5) |
| 7 | (joint/DL TCI 23; UL TCI 9) |

3. In step 3, a DCI with either format 1_1 or 1_2 (with or without DL data assignment) uses the 3-bit TCI field to choose one of the activated TCI codepoints and therefore indicate which TCI states to use for downlink and uplink transmission. Those TCI states are referred to as the 'indicated' TCI states.

The DCI with format 1_1 and 1_2 used to indicate the TCI states can be either with or without a DL data assignment. Therefore, a scheduling DCI and a beam indication DCI can be distinguished.

For the scheduling DCI, the ACK/NAK of the PDSCH scheduled by the DCI carrying the beam indication can be used as an ACK also for the DCI. For beam indication DCI, an ACK/NACK is also reported. An ACK is reported in a PUCCH after a certain number of slots after the end of the PDCCH reception. In Rel.17 unified TCI framework, indicated TCI is applied after $BeamAppTime\_r17$ = {1, 2, 4, 7, 14, 28, 42, 56, 70, 84, 98, 112, 224, 336} symbols from ACK transmission of the beam indication DCI.

The spatial filters indicated by the DCI would apply to all DL and UL signals and channels (unless they are RRC configured not to apply the indicated TCI state); it is applied to:

- all or a subset of PDCCH(s) in a cell,
- the PDSCHs scheduled by the PDCCH(s),
- dynamic- or configured-grant PUSCH
- UE-dedicated PUCCH resources.
- Aperiodic CSI-RS or SRS (limited to certain usage)

The unified TCI framework in Release 17 only supports single-TRP operation. Moreover, it is not allowed to configure both Rel.15/16 beam indication and Rel.17 TCI state in the same band. Therefore, Release 18 aims to extending Rel-17 unified TCI framework to the multi-TRP scenario and avoiding having the UE simultaneously manage both legacy and unified TCI beam indication schemes.

*Multi TRP transmission schemes*

In Release 16 and 17 there exist several Multi TRP transmission schemes. For example, in a Single-DCI based multiTRP PDSCH repetition scheme, a single DCI which is transmitted from one of the TRPs is used to schedule two PDSCH transmissions from two TRPs respectively. The scheduling DCI indicates two TCI states, each corresponding to one TRP. Such a scheme may be a Space Division Multiplexed (SDMed), Frequency Division Multiplexed (FDMed) or Time Division Multiplexed (TDMed) scheme.

For an exemplary SDMed, the first TRP may transmit a subset of layers of the transport block while the second TRP may transmit the remaining layers, on the same time and frequency resources. Antenna ports from different CDM groups are used to transmit the layers from each TRP, where the first TCI state corresponds to the first CDM group, and the second TCI state corresponds to the second CDM group. Dynamic switching between PDSCH SDM multiTRP scheme and single TRP PDSCH transmission is indicated by using two TCI states in the DCI and using antenna ports from two different CDM groups.

In exemplary FDM and TDM repetition schemes, two TRPs may repeat the same PDSCH transmission either in frequency or time domain. For the time domain, intraslot as well as interslot repetition may be used. While FDM schemes have lower latency, for TDM schemes, an UE requires to receive only one beam at a time which may become relevant in frequency range 2 (FR2) with analog beamforming. Antenna ports from the same CDM group are used for the PDSCH transmissions from the two TRPs.

Switching between repetition schemes is done via RRC configuration. Moreover, dynamic switching between single TRP, SDM multiTRP scheme, and the repetition schemes is done by whether a single TCI state or two TCI states, and whether DMRS in a single CDM group or two CDM groups are indicated in a DCI format scheduling a PDSCH.

In release 17, a Single-DCI based multiTRP PDCCH repetition scheme is defined. For PDCCH repetition, two PDCCH candidates are linked with each other via the higher layer parameter *searchSpaceLinking* in the search space set configuration. Furthermore, these two PDCCH candidates are configured in different Search Space sets that are associated with corresponding CORESETs. When the corresponding CORESETs have different TCI states, the two linked PDCCH repetitions carrying the same DCI are transmitted on two different beams.

Notice that once UE receives PDCCH configurations, it may identify the linked PDCCH candidates for repetition. Moreover, depending on the configurations for a given UE, it is possible that only some of the SS sets are linked for repetition while other SS sets contain individual PDCCH candidates without repetition. Then the network may dynamically select the linked PDCCH candidates or individual PDCCH candidates for DCI transmission, and hence dynamically switch between single TRP and multiTRP transmission, depending on the reliability and latency requirements. Note that is not supported in this scheme that the PDCCH candidates originate from CORESETs associated with different CORESET pool index values.

In Release 17 multi-TRP PUCCH repetition scheme, a PUCCH resource containing UL control information (UCI) may be repeated in a TDMed manner using two spatial relation data per PUCCH resource. When configured with higher layer parameter *PUCCH-nrofSlots,* the UE repeats the transmission of the UCI with the given PUCCH resource for the specified number of slots. The PUCCH resource is indicated with multiple spatial relations (FR2) and multiple power control parameters (FR1) via MAC-CE messages. Release 17 may support inter-slot repetition and intra-slot repetition. Switching between single TRP and multiTRP may be done dynamically.

Release 17 enabled TDMed PUSCH repetition toward two TRPs. Both grant-based, mainly single-DCI PUSCH repetition Type A and repetition Type B, and configured grant (CG)- based, both Type 1 and Type 2, PUSCH repetition is supported with two UL beams. For single-DCI based multi-TRP PUSCH repetition, both codebook (CB)-based and non-codebook (NCB)-based PUSCH repetition is supported by indicating two sounding reference signal (SRS) resource indicators (SRIs) and two transmit precoding matrix indicators (TPMIs) (for CB-based PUSCH) in DCI format format 0_1/0_2. The respective SRS resource set is applied for each SRI, which also allows using up to two power control parameter sets.

Dynamic switching between single TRP and non-CB/CB based multiTRP PUSCH repetition was enabled by introducing a new 2 bit DCI field as follow:

| Codepoint | SRS resource set(s) | SRI (for both CB and NCB)/ TPMI (CB only) field(s) |
|---|---|---|
| 00 | s-TRP mode with 1st SRS resource set (TRP1) | 1st SRI/TPMI field (2nd field is unused) |
| 01 | s-TRP mode with 2nd SRS resource set (TRP2) | 1st SRI/TPMI field (2nd field is unused) |

(continued)

| Codepoint | SRS resource set(s) | SRI (for both CB and NCB)/ TPMI (CB only) field(s) |
|---|---|---|
| 10 | m-TRP mode with (TRP1 ,TRP2 order) 1st SRI/TPMI field: 1st SRS resource set 2nd SRI/TPMI field: 2nd SRS resource set | Both 1st and 2nd SRI/TPMI fields |
| 11 | m-TRP mode with (TRP2,TRP1 order) 1st SRI/TPMI field: FFS 2nd SRI/TPMI field: FFS | Both 1st and 2nd SRI/TPMI fields |

Spatial- and frequency-domain multiplexing of PUSCH(s) towards multiple TRPs and simultaneous transmission of multiple PUSCHs are not supported.

In Release 17 High Speed Train (HST)-SFN, single DCI based multi-TRP PDCCH and multiTRP PDSCH SFN schemes were introduced. Here the same copy of a PDCCH or a PDSCH is transmitted from two TRPs on the same time frequency resources. It is assumed that TRP specific SSB/TRS/CSI-RS transmissions are transmitted in a non-SFN manner to facilitate more accurate frequency offset compensation. SFN based multi-TRP PDCCH is enabled by a combination of RRC configuration and activation of a CORESET with two TCI states by MAC-CE. For enhanced SFN based multi-TRP PDSCH, it is enabled by both a RRC configuration and indication of two TCI states in a DCI scheduling the PDSCH. Dynamic switching between SFN based multi-TRP PDSCH and single TRP PDSCH is supported.

In Release 16, MultiDCI multiTRP PDSCH NCJT was introduced to support scenarios with nonideal backhaul between the TRPs, and each TRP schedules a PDSCH using its own DCI. Therefore, for multi-DCI based NC-JT, two PDSCHs can be scheduled simultaneously with two PDCCHs and the two PDSCHs can be fully, partially, or non-overlapping. To handle the HARQ feedback, the CORESET pool concept was introduced. In the RRC configuration, the two TRPs are implicitly represented with two different control resource set (CORESET) groups, each of which is identified by the value of RRC parameter CORESETPoolIndex. The feedback for any received PDSCH that are associated with the same CORESET pool will feed back their HARQ A/N in the same PUCCH. Subsequently, it was decided to also activate TCI states for PDSCH per CORESET pool, so only one TCI state can be indicated in a DCI scheduling a PDSCH.

*Terminology*

In the following, UEs, base stations, and procedures will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

**Embodiments**

In general, as already indicated above, it may be desirable to extend the Rel-17 unified TCI framework to the multi-TRP scenario.

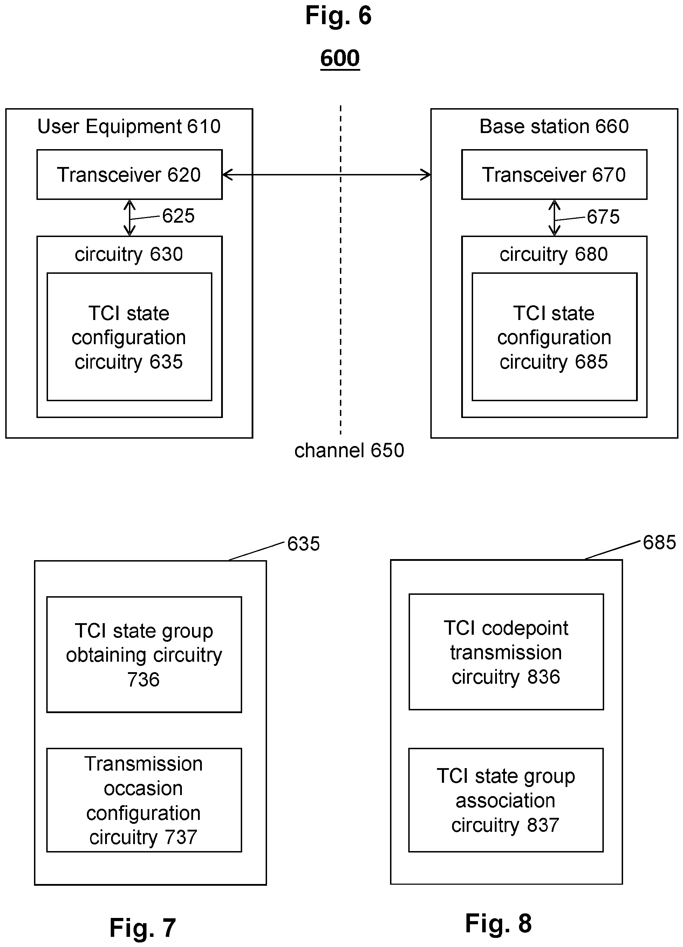

The present disclosure provides a network node and a user equipment well as a corresponding methods and programs. For instance, an integrated circuit can control a process of a UE or base station. As illustrated in **Fig. 6,** user equipment 610 and network node 660 may communicate with each other over a wireless channel in a wireless communication system. For instance, the user equipment may be a NR user equipment, and the network node may be a base station or scheduling node such as a eNB, or a NR gNB, in particular a gNB in a Non-Terrestrial Network (NTN) NR system. An example of such communication system is illustrated in Fig. 6. The communication system 600 may be a wireless communication system in accordance with the technical specifications of 5G, in particular a NR communication system. However, the present disclosure is not limited to 3GPP NR and may also be applied to other wireless or cellular systems such as NTNs.

Fig. 6 illustrates a general, simplified and exemplary block diagram of a user equipment 610 (also termed communication device) and a network node 660. However, in general, a scheduling device may also be a terminal in case of a sidelink connection between two terminals. Moreover, in particular with respect to the use cases of URLLC; eMBB, and mMTC, the user equipment 610 may also be a sensor device, a wearable device, or a connected vehicle, or a controller of an automated machine in an industrial factory. Further, a user equipment 610 may be able to function as a relay between network node 660 and another communication device (e.g. the disclosure is not limited to communication "terminals" or user "terminals").

The UE and eNB/gNB are communicating with each other over a (wireless) physical channel 650 respectively using their transceivers 620 (UE side) and 670 (network node side). Together, the network node 660 and the terminal 610 form the communication system 600. The communication system 600 may further include other entities such as those shown in Fig. 1.

As shown in **Fig. 6** (left-hand side), according to a first exemplary embodiment, a user equipment (UE) 610 is provided. The UE 610 comprises a transceiver 620 and circuitry 630.

The transceiver 620, in operation, receives an indication for one or more transmission configuration indication (TCI) states. Such TCI states indicated by a DCI format are referred to as indicated TCI states or as new TCI states in the following. Such indication may be a TCI codepoint, or the like. The indication may be received from a base station. However, the present disclosure is not limited thereto and the TCI may be indicated in device to device communication or the like.

The circuitry 630, in operation, obtains one or more TCI state groups for the one or more new TCI states, wherein a TCI state group out of the one or more TCI state groups corresponds to one or more spatial directions, and configures one or more transmission occasions for an uplink or downlink transmission channel based on a pre-configured association between TCI state groups and transmission occasions.

The TCI state groups may be obtained based on a pre-configured association of groups and (available) TCI states. Available TCI states may correspond, for example, to the TCI states configured by a RRC signaling as described in section *Transmission Configuration Indication (TCI) states.*

For example, the UE may receive a configuration indication including an association between the one or more TCI state groups and the set of available TCI states. Such indication may be, for example, a RRC message or any other suitable configuration message. Thus, such association may be higher layer configured.

For each group associated with the TCI states after an updating of said states, a corresponding transmission occasion is configured based on the spatial directions of said group. Such configuration may include other higher layer parameters related to multi TRP transmissions that may also enter in the determination the mapping of groups to transmission occasions.

The UE may receive an indication that enables it to group the new TCI states into TCI state groups, where a TCI state group corresponds to a TRP, a spatial direction, a cluster of TRPs, a set of spatial directions grouped together according to certain criteria like AoA (angle of arrival), or the like.

The UE may configure one or more transmission occasions for an uplink or downlink channel from one or more TRPs based on a pre-configured association between the TCI state groups and transmission occasions. For example, the UE may configure two repetitions for the PDSCH channel, each counting as a transmission occasion.

For example, in a case when UE may receive two PDCCHs on two CORESETS (cf. section *Multi TRP transmission schemes*), the UE may be configured to receive the first PDCCH on a CORESET using the TCI state that belongs to a first group and the second PDCCH on a CORESET using the TCI state that belongs to a second group.

For example, in the case when the UE may transmit PUCCH repetitions in TDM fashion (cf. section *Multi TRP transmission schemes*), the first transmitted repetition follows a TCI state from a first group and a second repetition uses a TCI state from a second group. Moreover, when the UE is indicated with TCI states from two TCI groups, and is operating in single TRP transmission, the UE may be configured for example to use a TCI state belonging to a first TCI group and not a second TCI group.

In general, the circuitry 630 may control the transceiver 620 to receive and/or transmit data. This is illustrated by an arrow 625 which represents schematically an interface between the circuitry 630 and the transceiver 620, over which the control is performed. For example, the circuitry 630 may control 625 the transceiver 620 to receive the indication for the one or more new TCI states.

**Fig. 7** shows an exemplary functional structure of the circuitry 630, in particular, the circuitry 635 handling TCI state configuration. As shown, the TCI state configuration circuitry 635 may include a TCI state group obtaining circuitry 736 and a transmission occasion configuration circuitry 737. More specifically, circuitry 736 may obtain an association of TCI state groups and new TCI states indicated in the TCI codepoint. The response transmission circuitry 737 may determine when and/or how to (re)configure transmission occasions.

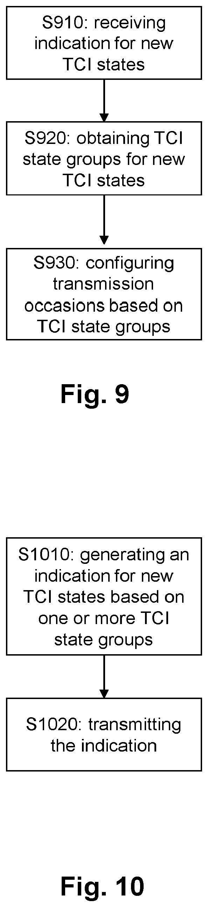

In correspondence with the above described UE, a method for configuring transmission occasions by a user equipment is provided. As shown in **Fig. 9,** the method comprises the steps of:

- receiving (S910) an indication for one or more new transmission configuration indication, TCI, states; and
- obtaining (S920) one or more TCI state groups for the one or more new TCI states, wherein a TCI state group out of the one or more TCI state groups corresponds to one or more spatial directions; and
- configuring (S930) one or more transmission occasions for an uplink or downlink transmission channel based on a pre-configured association between TCI state groups and transmission occasions.

As also shown in Fig. 6 (right-hand side), a base station 660 is provided. The base station 660 comprises a transceiver 670 and a circuitry 680. The circuitry 680, in operation, generates an indication for one or more indicated transmission configuration indication, TCI, states based on one or more TCI state groups for the one or more indicated TCI states, to instruct a user equipment, UE, to configure one or more transmission occasions for an uplink or downlink transmission channel based on a pre-configured association between TCI state groups and transmission occasions, wherein a TCI state group out of the one or more TCI state groups corresponds to one or more spatial directions. The transceiver 670, in operation, transmits the indication for one or more indicated TCI states.

In general, the circuitry 680 may control the transceiver 670 to receive and/or transmit data. This is illustrated by an arrow 675 which represents schematically an interface between the circuitry 680 and the transceiver 670, over which the control is performed. For example, the circuitry 680 may instruct 675 the transceiver 670 to transmit said indication.

Fig. 8 shows an exemplary functional structure of the TCI state configuration circuitry 685. In particular, the TCI state configuration circuitry 685 may include a TCI codepoint transmission circuitry 836 and a TCI state group association circuitry 837. Circuitry 836 may be responsible for transmitting a TCI codepoint. Furthermore, circuitry 837 may be responsible for transmitting a TCI state group association.

Furthermore, in correspondence with the above described base station, a communication method to be performed by a base station is provided. As shown in **Fig. 10,** the method comprising the steps of:

- generating (S1010) an indication for one or more indicated transmission configuration indication, TCI, states based on one or more TCI state groups for the one or more indicated TCI states, to instruct a user equipment, UE, to configure one or more transmission occasions for an uplink or downlink transmission channel based on a pre-configured association between TCI state groups and transmission occasions, wherein a TCI state group out of the one or more TCI state groups corresponds to one or more spatial directions; and
- transmitting (S1020) the indication for one or more indicated TCI states.

The UE 610 may comprise the transceiver 620 and a (processing) circuitry 630, and the network node 660 may comprise the transceiver 670 and a (processing) circuitry 680. The transceiver 610 in turn may comprise and/or function as a receiver and/or a transmitter. In this disclosure, in other words, the term "transceiver" is used for hardware and software components that allow the communication device 610, or, respectively base station 660 to transmit and/or receive radio signals over a wireless channel 650. Accordingly, a transceiver corresponds to a receiver, a transmitter, or a combination of a receiver and a transmitter.

Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only transmits signals. Moreover, the term "circuitry" includes processing circuitry formed by one or more processors or processing units, etc. The circuitries 630 and 680 (or processing circuitries) may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data.

The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data that is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

It is further noted that any of the steps/operations/methods described below may be performed or controlled by the circuitry 630 (on the UE side) and/or the circuitry 680 (on the network node side).

In the further description, the details and embodiments apply to each of the user equipment, the network node and the methods unless explicit statement or context indicates otherwise. Moreover, it is noted that any of the steps described below may be included as code instructions in a program, which may be executed by one or more processors (e.g. the circuitry 630 and/or the circuitry 680).

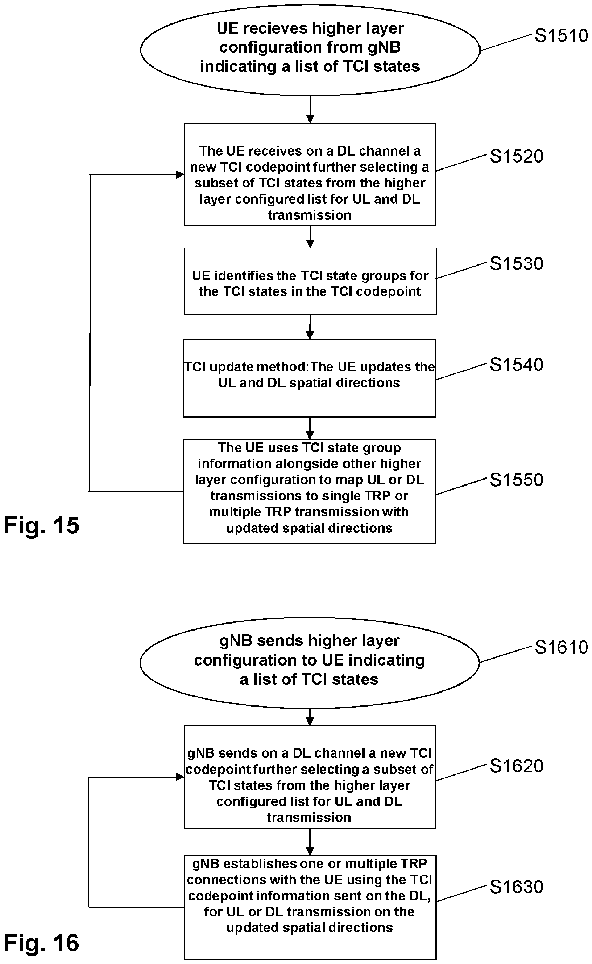

**Fig. 15** is a flowchart depicting exemplary steps performed by an UE. For example, the UE receives (S1510) a higher layer configuration (e.g. a RRC configuration) from gNB indicating a set of TCI states. Said set may include for each TCI state an association with a respective TCI state group. The UE receives (S1520) on a DL channel a TCI codepoint further selecting a subset of TCI states from the higher layer configured states (i.e. available TCI states) for UL and DL transmission. The UE obtains (identifies) (S1530) the TCI state groups for the TCI states in the TCI codepoint. The UE updates (S1540) the UL and DL spatial directions using the TCI states indicated in the received TCI codepoint. The UE uses (S1550) the TCI state group information alongside other higher layer configuration to map UL or DL transmissions to single TRP or multiple TRP transmission with updated spatial directions. Steps S1530 to S1550 may be repeated if a new TCI codepoint is received (S1520) by the UE.

**Fig. 16** is a flowchart depicting exemplary steps performed by a base station (gNB). For example, the base station transmits (S1610) a higher layer configuration (e.g. a RRC configuration) to an UE indicating a set of TCI states. The base station transmits (S1620) on a DL channel a new TCI codepoint further selecting a subset of TCI states from the higher layer configuration for UL and DL transmission. The base station establishes one or multiple TRP connections with the UE using the TCI codepoint information sent on the DL, for UL or DL transmission on the updated spatial directions.

*Grouping*

A TCI state may be associated with a TCI state group. A TCI state group out of these one or more TCI state groups corresponds to one or more spatial directions. In particular, a TCI state group may include a set of spatial field filters belonging to one spatial direction or a cluster of spatial directions grouped together, which share some similar channel propagation conditions. For example, a TCI state group may correspond to a TRP. However, a TCI state group is not limited thereto. In other words, such a TRP includes one spatial direction or a cluster of spatial directions grouped together.

An association between the one or more TCI state groups and a set of available TCI states is pre-configured.

Such pre-configuration may be performed by a standard, by a configuration indication received by the UE, or the like. For example, the UE receives a configuration indication including an association between the one or more TCI state groups and the set of available TCI states. Such indication may be, for example, a RRC message or any other suitable configuration message. Thus, such association may be higher layer configured.

A set of available TCI states may correspond, for example, to the TCI states defined by a RRC signaling as described in section *Transmission Configuration Indication (TCI) states.* In other words such a set of available TCI states corresponds to a pre-configured set of TCI states. The UE may use a subset of said TCI states for establishing links. Such subset may be indicated by a TCI codepoint.

Using a DL channel, the gNB may indicate to the UE a list of activated TCI codepoints, as explained above, where a TCI codepoint refers to a set of TCI states indicating DL and UL spatial transmission directions. A TCI state in a codepoint may correspond to UL, DL or joint UL/DL (beam correspondence) spatial direction. The UE uses the TCI codepoint to establish a transmission link (control/data channels) with a single TRP or multiple TRPs depending on the number of spatial directions the TCI codepoint.

In a first exemplary implementation, there are two TCI state groups. The TCI state groups to which a TCI state may belong, may be indicated by a binary parameter. An exemplary binary parameter TCI_group_index may indicate that the TCI state belongs to either group 0 or group 1. In other words if the binary parameter has a first value, the TCI state belongs to a first group (e.g. group 0). If the binary parameter has a second value, the TCI state belongs to a second group (e.g. group 1). In other words, a TCI state may be configured with a binary parameter indicating a group.

The TCI codepoint for the first exemplary implementation may include TCI states belonging to either TCI group 0 or TCI group 1 or both TCI groups 0 and 1. This allows the UE to establish a single transmission link with either group 0 TRPs or group 1 TRPs, or multiple transmission links with both, group 0 TRPs and group 1 TRPs.

In other words, the TCI codepoint represents one or more TCI states. For example, the TCI states in said codepoint may belong to group 0. Then the UE may establish a single transmission link with a TRP corresponding to group 0. For example, the TCI states in said codepoint may belong to group 1. Then the UE may establish a single transmission link with a TRP corresponding to group 1. For example, a subset of TCI states in said codepoint may belong to group 0 and another subset of TCI states in said codepoint may belong to group 1. Then the UE may establish multiple transmission links with the TRP corresponding to group 0 as well as with the TRP corresponding to group 1.

For multiple transmission links any multi TRP scheme as SDM, FDM, TDM, or the like may be used. Exemplary multi TRP schemes as defined in Release 16 and/or 17 are given in section *Multi TRP transmission schemes.* However, the present invention is not limited to such schemes, any other multi TRP scheme may be applied.

For example, the TCI state in the RRC configuration may indicated by a parameter that is binary, indicating group 0 or 1:

```
TCI-State ::=          SEQUENCE {
   tci-StateId           TCI-StateId,
   TCI_group             binary
   qcl-Type1             QCL-Info,
   qcl-Type2             QCL-Info
   ...
                         }
```

tci-StateId is an identifier that used to configure a channel/RS with a TCI state, allowing the channel/RS to be QCLed with the reference signals indicated by the TCI state with this ID. The TCI group signaling in the first exemplary implementation is compact and incurs low overhead. Moreover, it allows the UE to perform multi TRP transmission with TRPs corresponding to two TCI state groups.

In a second exemplary implementation, the TCI state groups to which a TCI state may belong, may be indicated by a group index parameter. Said group index parameter may be an m-bit parameter. For example, the parameter TCI_group_index may indicate that the TCI state belongs to one of the groups $0 \dots 2^m - 1$. In other words, a TCI state may be configured with parameter TCI_group_index indicating a group.

The TCI codepoint may include of TCI states belonging to either only one of TCI groups $\{0,\dots, 2^m - 1\}$ or a combination of at most a pre-configured maximum number of TCI state groups. Such maximum number of TCI state groups may be fixed by a standard or may be configured by a received configuration indication, or the like.

For example, a parameter Kmax indicates such a pre-configured maximum number of TCI state groups. In an exemplary case, Kmax may be pre-configured as 2 while there are more than two groups (m>1). In such an example, the more than two TCI state groups correspond to more than two special directions or TRPs. However, a UE may establish transmission links with two TRPs out of the more than two TRPs. The present invention is not limited to such an example. Any value of Kmax may be defined by a standard or be configured by a configuration indication.

For example, such a parameter Kmax may take values in the range $\{1 \dots 2^m\}$.

As in the first exemplary implementation, this allows the UE to establish a single transmission link or multiple transmission links (SDMed, FDMed, TDMed, or the like) with the TRPs corresponding to the indicated groups.

The TCI group signaling in the second exemplary implementation is compact and incurs low overhead, and it allows the UE to do multiTRP transmission with TRPs from more than two TCI state groups when m>1, for example in dense deployment environments with a lot of spatial diversity.

In a third exemplary embodiment, a higher layer configuration may include one or more lists of TCI states. The one or more lists include TCI states out of the set of available TCI states. Each list out of the one or more lists, may be associated with a respective group out of the one or more TCI state groups.

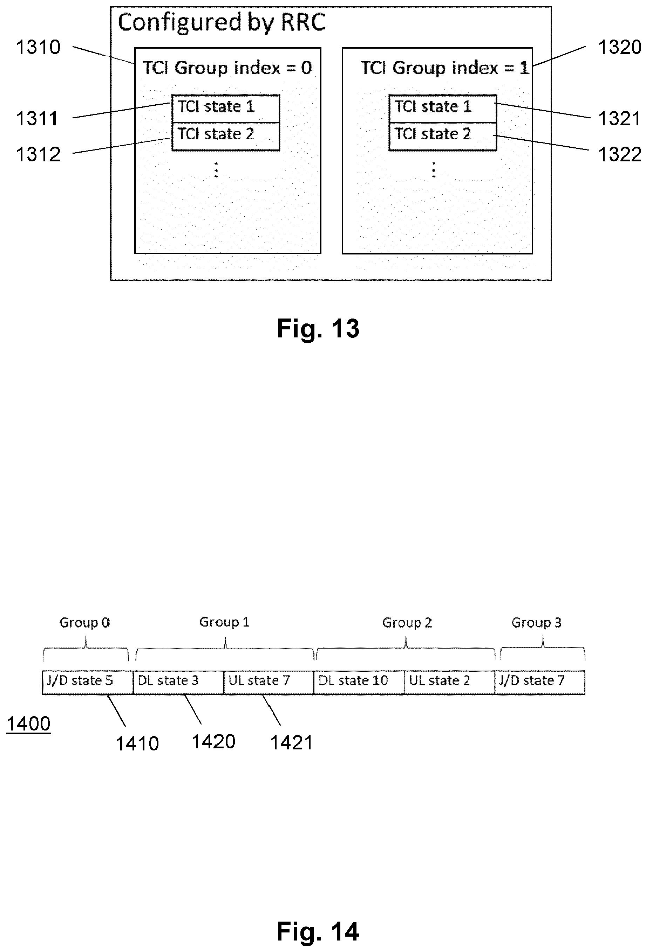

This is exemplarily depicted in Fig. 13, where a first list 1310 includes at least a first TCI state of the first list 1311 and a second TCI state of the first list 1312. A second list 1320 includes at least a first TCI state of the second list 1321 and a second TCI state of the second list 1322. The first list 1310 may be labeled by TCI group index 0 and the second list 1320 may be labeled by TCI group index 1.

Such lists may be pre-configured by a standard or a received configuration (e.g. an RRC message, or the like).

For example, the UE is higher layer configured with N separate lists of TCI states where each list is identified with a TCI_group_index. Such TCI_group_index may take values in the range $\{0 \dots N - 1\}$ indicating that the TCI states in one list belong to one of the TCI state groups 0 to N-1.

Analogous to the second exemplary implementation, in this third exemplary implementation, the TCI codepoint may include of TCI states belonging to either only one of the TCI groups $\{0,\dots, N-1\}$ or a combination of at most a pre-configured maximum number of TCI state groups. Such maximum number of TCI state groups may be fixed by a standard or may be configured by a received configuration indication, or the like. Such maximum may be indicated by the above-mentioned parameter Kmax.

In the third exemplary embodiment, such a parameter Kmax may take, for example, values in the range $\{1 \dots N\}$.

Such an exemplary implementation defines a TCI group at the level of the TCI list and not at the level of the TCI state. This may cause less overhead in the reconfiguration of the higher layer if gNB is only updating one TCI list for one TCI state group.

In a fourth exemplary implementation, an association of TCI states in the indication and TCI state groups is determined by an ordering of TCI states in the indication of the one or more new TCI states, which corresponds to a pre-defined ordering of TCI state groups. Such a pre-defined ordering may be defined by a standard or a configuration or the like.

An exemplary scheme is shown in Fig. 14, where a first TCI state 1410 in the TCI codepoint 1400 is determined to be associated with group 0. The exemplary first TCI state 1410 in the codepoint 1400 is a joint UL/DL TCI state. The exemplary second TCI state 1420 in the TCI codepoint 1400 is a DL state, which is followed by an exemplary third TCI state 1421, which is an UL state. Thus it is determined that the exemplary second TCI state 1420 and the exemplary third TCI state 1421 are associated with group 1.

In the fourth exemplary implementation, a TCI codepoint may be an ordered set of TCI states. The TCI states of TCI group 0 come first, followed by the TCI states of groups 1, up to a group P-1 in increasing order, where the maximum number of groups P may be fixed by a standard or may be configurable by an indication or the like.

In the fourth exemplary implementation, there may be rules on the allowed TCI codepoint format, for example, when one group is skipped, or when either DL or UL information for a certain group is not sent. The TCI codepoint may include an indication to skip one or more groups in the determination of the association. Moreover, the TCI codepoint may include an indication that more than one TCI state may be associated with a current group. Such indications may not necessarily be included in the TCI codepoint. Such indications may be received independently of the TCI codepoint, or may be (pre-)configured for a UE by a standard or a configuration or the like.

In the fourth exemplary implementation, no explicit signaling is required for the TCI state group which may save overhead.

The TCI grouping as explained above, especially as described for the first, second, third and fourth exemplary implementation may be combined with any updating of the current TCI states based on the new TCI states included in the codepoint, including the Updating of the TCI states as described in the following.

*Updating of TCI states*

The one or more current TCI states may be updated based on the indication for the one or more new TCI states. Such an updating may be performed by groups or independently thereof. Such groups may be obtained by any suitable grouping implementation, including the first, second, third and fourth exemplary implementation as described in the previous section.

In a fifth exemplary implementation, for each group associated with the one or more new TCI states included in the indication (i.e. codepoint), the current TCI states associated with said group are updated according to the indication. Such an updating updates the spatial directions used by a UE for uplink and downlink transmission.

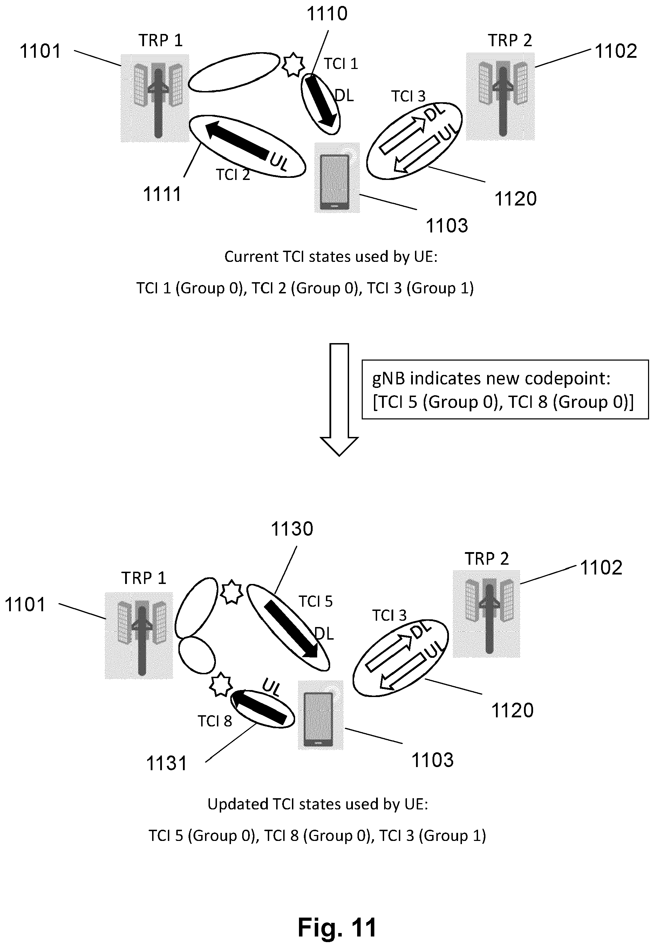

This is shown exemplarily in Fig. 11. An UE 1103 is configured to use TCI state 2 for the UL configuration 1111 to TRP1 1101 and TCI state 1 for the DL 1110 with TRP1 1101. Moreover the UE is configured to use TCI3 as joint UL/DL configuration 1120 with respect to TRP2 1102. TCI states 1 and 2 are associated with group 0 (and thus with TRP1 1101), whereas TCI state 3 belongs to group 1 (and thus TRP 2 1102). For example, a gNB may indicate a new codepoint: [TCI 5 (Group 0), TCI 8 (Group 0)]. Thus, the UE obtains the groups associated with the one or more new TCI states. In the example of Fig. 11, this is group 0. The UE may update the current TCI states for group 0 by the new TCI states for group 0. In other words, the UE replaces the states TCI 1 (Group 0), TCI 2 (Group 0) by the states TCI 5 (Group 0) 1130, TCI 8 (Group 0) 1131.

The TCI states in group 0 that the UE is using are updated based on the group 0 TCI states in the codepoint. An analogous updating may be performed for each group 1,...,P-1 where P is the number of TCI state groups present in the indicated TCI codepoint.

If one or more current TCI states are associated with groups other than the groups associated with the one or more new TCI states, said one or more current TCI states remain available for transmission occasions after the updating. In other words, the TCI states associated with groups that are not included in the TCI codepoint, are not updated.

For example, in Fig. 11, the TCI states (i.e. TCI 3) associated with group 1, which are included in the current TCI states, are also included in the updated TCI states.

In the fourth exemplary implementation, information about the spatial directions for other TRPs that are not updated, is kept.

The fourth exemplary implementation may be used to switch from a single TRP to multi TRPs. If the current TCI states are used to establish multiple transmission links, the fourth exemplary implementation enables the updating of spatial directions of one or more selected TRPs.

In a sixth exemplary implementation, the current TCI states are replaced by the one or more new TCI states included in the indication (i.e. codepoint). Such an updating overwrites the spatial directions used by a UE for uplink and downlink transmission.

If one or more current TCI states are associated with groups other than the groups associated with the one or more new TCI states, said one or more current TCI states are unavailable for transmission occasions after the updating. In other words, in the updating according to the sixth exemplary implementation, the UE overwrites all current TCI states by the new TCI states included in the codepoint.

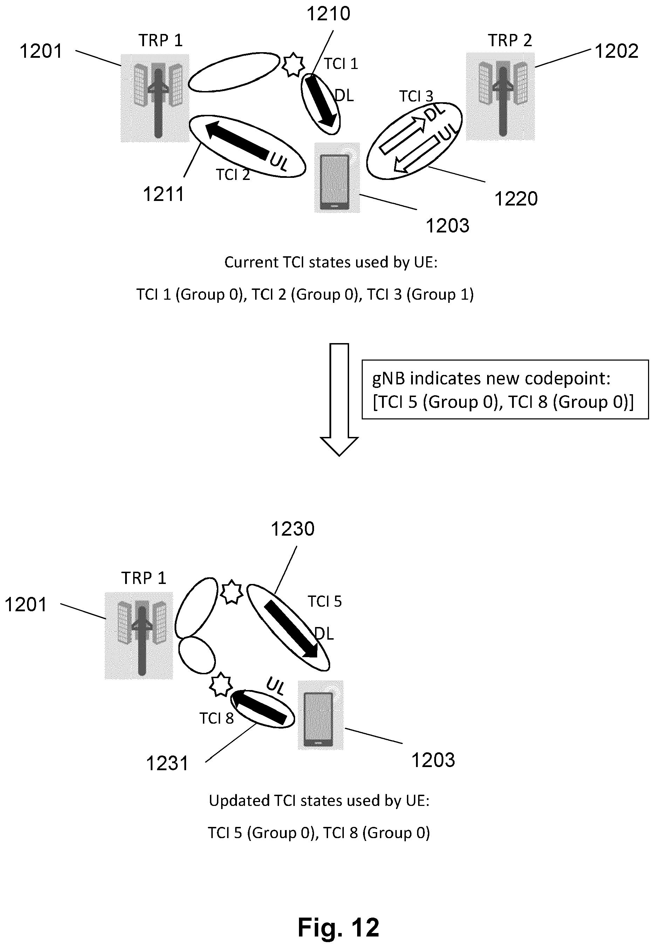

This is shown exemplarily in Fig. 12. An UE 1203 is configured to use TCI state 2 for the UL configuration 1211 to TRP1 1201 and TCI state 1 for the DL 1210 with TRP1 1201. Moreover the UE is configured to use TCI3 as joint UL/DL configuration 1220 with respect to TRP2 1202. TCI states 1 and 2 are associated with group 0 (and thus with TRP1 1201), whereas TCI state 3 belongs to group 1 (and thus TRP 2 1202). For example, a gNB may indicate a new codepoint: [TCI 5 (Group 0), TCI 8 (Group 0)]. Thus, the UE replaces the states TCI 1 (Group 0), TCI 2 (Group 0), TCI 3 (Group 1) by the new states TCI 5 (Group 0) 12300, TCI 8 (Group 0) 1231. In the example of Fig. 12, the multi TRP transmission has been updated to a single TRP transmission.

The UE may use the TCI states indicated in the codepoint to establish a single transmission link or multiple transmission links (SDMed, FDMed, TDMed, etc) with the TRPs corresponding to the indicated groups.

The updating according to the sixth exemplary implementation enables dynamic switching between single and multi TRP transmission.

An updating method, for example according to the fifth exemplary implementation or the sixth exemplary implementation, may be selected by the UE by default, via higher layer configuration, or via DCI signaling, or the like.

*Hardware and Software Implementation of the present disclosure*

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

*Further Aspects*

According to a first aspect, a user equipment (UE) is provided. The UE comprises a transceiver which, in operation, receives an indication for one or more indicated transmission configuration indication, TCI, states. The UE comprises circuitry which, in operation: obtains one or more TCI state groups for the one or more indicated TCI states, wherein a TCI state group out of the one or more TCI state groups corresponds to one or more spatial directions; and configures one or more transmission occasions for an uplink or downlink transmission channel based on a pre-configured association between TCI state groups and transmission occasions.

According to a second aspect provided in addition to the first aspect, an association between the one or more TCI state groups and a set of available TCI states is pre-configured; and a TCI state out of the set of available TCI states is associated with a group out of the one or more TCI state groups.

According to a third aspect provided in addition to the second aspect, the one or more TCI state groups are two TCI state groups; and in the association between the one or more TCI state groups and the set of available TCI states, each group out of the two TCI state groups, to which a TCI state out of the set of available TCI states belongs, is indicated by a respective value of a binary parameter.

According to a fourth aspect provided in addition to the second aspect, in the association between the one or more TCI state groups and the set of available TCI states, each group out of the one or more TCI state groups, to which a TCI state out of the set of available TCI states belongs, is indicated by a respective value of a group index parameter.

According to a fifth aspect provided in addition to the second aspect, a higher layer configuration includes one or more lists, the one or more lists including TCI states out of the set of available TCI states; and in the association between the one or more TCI state groups and a set of available TCI states, each list out of the one or more lists, is associated with a respective group out of the one or more TCI state groups.

According to a sixth aspect, provided in addition to one of the fourth or fifth aspects, the indication for one or more indicated TCI states includes TCI states associated with at most a pre-configured maximum number of TCI state groups.

According to a seventh aspect provided in addition to the first aspect, the circuitry, in operation, further determines an association of TCI states in the indication and TCI state groups by an ordering of TCI states in the indication of the one or more indicated TCI states, which corresponds to a pre-defined ordering of TCI state groups.

According to an eighth aspect, provided in addition to one of the first to seventh aspects, the circuitry, in operation, further updates one or more current TCI states based on the indication of the one or more indicated TCI states.

According to a ninth aspect provided in addition to the eighth aspect, in the updating of the current TCI states, for each group associated with the one or more new indicated TCI states included in the indication, the current TCI states associated with said group are updated according to the indication; if one or more current TCI states are associated with groups other than the groups associated with the one or more new indicated TCI states, said one or more current TCI states remain available for transmission occasions after the updating.

According to a tenth aspect provided in addition to the eighth aspect, in the updating of the current TCI states, the current TCI states are replaced by the one or more indicated TCI states according to the indication; if one or more current TCI states are associated with groups other than the groups associated with the one or more indicated TCI states, said one or more current TCI states are unavailable for transmission occasions after the updating.

According to a eleventh aspect, provided in addition to one of the first to tenth aspects, in the configuring of the one or more transmission occasions, for each group associated with the TCI states after an updating of said states, a corresponding transmission occasion is configured based on the spatial directions of said group.

According to a twelfth aspect, provided in addition to one of the first to tenth aspects, the circuitry, in operation, further receives a configuration indication including an association between the one or more TCI state groups and the set of available TCI states.

According to a thirteenth aspect a method for configuring transmission occasions by a user equipment (UE) is provided. The method comprising the steps of:

- receiving an indication for one or more indicated transmission configuration indication, TCI, states; and
- obtaining one or more TCI state groups for the one or more indicated TCI states, wherein a TCI state group out of the one or more TCI state groups corresponds to one or more spatial directions; and
- configuring one or more transmission occasions for an uplink or downlink transmission channel based on a pre-configured association between TCI state groups and transmission occasions.

According to a fourteenth aspect, a base station is provided. The base station comprises circuitry which, in operation: generates an indication for one or more indicated transmission configuration indication, TCI, states based on one or more TCI state groups for the one or more indicated TCI states, to instruct a user equipment, UE, to configure one or more transmission occasions for an uplink or downlink transmission channel based on a pre-configured association between TCI state groups and transmission occasions, wherein a TCI state group out of the one or more TCI state groups corresponds to one or more spatial directions. The base station comprises a transceiver which, in operation: transmits the indication for one or more indicated TCI states.

According to a fifteenth aspect provided in addition to the fourteenth aspect, the circuitry, in operation, further generates a configuration indication including an association between the one or more TCI state groups and the set of available TCI states. For example the transceiver, in operation, further transmits said configuration indication.

According to a sixteenth aspect provided in addition to one of the fourteenth or fifteenth aspects, the circuitry, in operation, further configures one or more transmission occasions for an uplink or downlink transmission channel with an UE based on the pre-configured association between TCI state groups and transmission occasions.

According to a seventeenth aspect a method for transmitting a configuration indication by a base station is provided. The method comprising the steps of:

- generating an indication for one or more indicated transmission configuration indication, TCI, states based on one or more TCI state groups for the one or more indicated TCI states, to instruct a user equipment, UE, to configure one or more transmission occasions for an uplink or downlink transmission channel based on a pre-configured association between TCI state groups and transmission occasions, wherein a TCI state group out of the one or more TCI state groups corresponds to one or more spatial directions; and
- transmitting the indication for one or more indicated TCI states.

According to an eighteenth aspect, an integrated circuit is provided, which, in operation, controls a process of a user equipment, the process comprising the following steps performed by the user equipment:

- receiving an indication for one or more indicated transmission configuration indication, TCI, states; and
- obtaining one or more TCI state groups for the one or more indicated TCI states, wherein a TCI state group out of the one or more TCI state groups corresponds to one or more spatial directions; and
- configuring one or more transmission occasions for an uplink or downlink transmission channel based on a pre-configured association between TCI state groups and transmission occasions.

According to a nineteenth aspect, an integrated circuit is provided, which, in operation, controls a process of a base station, the process comprising the following steps performed by the network node:

- generating an indication for one or more indicated transmission configuration indication, TCI, states based on one or more TCI state groups for the one or more indicated TCI states, to instruct a user equipment, UE, to configure one or more transmission occasions for an uplink or downlink transmission channel based on a pre-configured association between TCI state groups and transmission occasions, wherein a TCI state group out of the one or more TCI state groups corresponds to one or more spatial directions; and
- transmitting the indication for one or more indicated TCI states.

According to a twentieth aspect, a program stored on a storage medium and including code instructions, which, when executed on one or more processors of a user equipment, cause the one or more processors to execute the following steps:

- receiving an indication for one or more indicated transmission configuration indication, TCI, states; and
- obtaining one or more TCI state groups for the one or more indicated TCI states, wherein a TCI state group out of the one or more TCI state groups corresponds to one or more spatial directions; and
- configuring one or more transmission occasions for an uplink or downlink transmission channel based on a pre-configured association between TCI state groups and transmission occasions.

According to a twenty-first aspect, a program stored on a storage medium and including code instructions, which, when executed on one or more processors of a base station, cause the one or more processors to execute the following steps:

- generating an indication for one or more indicated transmission configuration indication, TCI, states based on one or more TCI state groups for the one or more indicated TCI states, to instruct a user equipment, UE, to configure one or more transmission occasions for an uplink or downlink transmission channel based on a pre-configured association between TCI state groups and transmission occasions, wherein a TCI state group out of the one or more TCI state groups corresponds to one or more spatial directions; and
- transmitting the indication for one or more indicated TCI states.

Summarizing, the disclosure relates to a user equipment, a base station device, and respective methods for a user equipment and a base station. More specifically, the user equipment comprises a transceiver which, in operation receives an indication for one or more indicated transmission configuration indication, TCI, states; and circuitry which, in operation: obtains one or more TCI state groups for the one or more indicated TCI states, wherein a TCI state group out of the one or more TCI state groups corresponds to one or more spatial directions; and configures one or more transmission occasions for an uplink or downlink transmission channel based on a pre-configured association between TCI state groups and transmission occasions.

**Claims**

1. A user equipment, UE, comprising:

a transceiver which, in operation
receives an indication for one or more indicated transmission configuration indication, TCI, states; and
circuitry which, in operation:

obtains one or more TCI state groups for the one or more indicated TCI states, wherein a TCI state group out of the one or more TCI state groups corresponds to one or more spatial directions; and
configures one or more transmission occasions for an uplink or downlink transmission channel based on a pre-configured association between TCI state groups and transmission occasions.

2. The UE according to claim 1, wherein

an association between the one or more TCI state groups and a set of available TCI states is pre-configured; and
a TCI state out of the set of available TCI states is associated with a group out of the one or more TCI state groups.

3. The UE according to claim 2, wherein

the one or more TCI state groups are two TCI state groups; and
in the association between the one or more TCI state groups and the set of available TCI states, each group out of the two TCI state groups, to which a TCI state out of the set of available TCI states belongs, is indicated by a respective value of a binary parameter.

4. The UE according to claim 2, wherein
in the association between the one or more TCI state groups and the set of available TCI states, each group out of the one or more TCI state groups, to which a TCI state out of the set of available TCI states belongs, is indicated by a respective value of a group index parameter.

5. The UE according to claim 2, wherein

a higher layer configuration includes one or more lists, the one or more lists including TCI states out of the set of available TCI states; and

in the association between the one or more TCI state groups and a set of available TCI states, each list out of the one or more lists, is associated with a respective group out of the one or more TCI state groups.

6. The UE according to any of claims 4 or 5, wherein the indication for one or more indicated TCI states includes TCI states associated with at most a pre-configured maximum number of TCI state groups.

7. The UE according to claim 1, wherein the circuitry, in operation, further determines an association of TCI states in the indication and TCI state groups by an ordering of TCI states in the indication of the one or more indicated TCI states, which corresponds to a pre-defined ordering of TCI state groups.

8. The UE according to any of the claims 1 to 7, wherein the circuitry, in operation, further updates one or more current TCI states based on the indication of the one or more indicated TCI states.

9. The UE according to claim 8, wherein in the updating of the current TCI states, for each group associated with the one or more indicated TCI states included in the indication, the current TCI states associated with said group are updated according to the indication;

if one or more current TCI states are associated with groups other than the groups associated with the one or more indicated TCI states, said one or more current TCI states remain available for transmission occasions after the updating.

10. The UE according to claim 8, wherein in the updating of the current TCI states, the current TCI states are replaced by the one or more indicated TCI states according to the indication;

if one or more current TCI states are associated with groups other than the groups associated with the one or more indicated TCI states, said one or more current TCI states are unavailable for transmission occasions after the updating .

11. The UE according to any of the claims 1 to 10, wherein in the configuring of the one or more transmission occasions, for each group associated with the TCI states after an updating of said states, a corresponding transmission occasion is configured based on the spatial directions of said group.

12. The UE according to any of the claims 1 to 10, wherein the circuitry, in operation, further receives a configuration indication including an association between the one or more TCI state groups and the set of available TCI states.

13. A method for configuring transmission occasions by a user equipment, UE, the method comprising:

receiving an indication for one or more indicated transmission configuration indication, TCI, states; and
obtaining one or more TCI state groups for the one or more indicated TCI states, wherein a TCI state group out of the one or more TCI state groups corresponds to one or more spatial directions; and
configuring one or more transmission occasions for an uplink or downlink transmission channel based on a pre-configured association between TCI state groups and transmission occasions.

14. A base station comprising:

circuitry which, in operation:

generates an indication for one or more indicated transmission configuration indication, TCI, states based on one or more TCI state groups for the one or more indicated TCI states, to instruct a user equipment, UE, to configure one or more transmission occasions for an uplink or downlink transmission channel based on a pre-configured association between TCI state groups and transmission occasions,
wherein a TCI state group out of the one or more TCI state groups corresponds to one or more spatial directions; and

a transceiver which, in operation:
transmits the indication for one or more indicated transmission configuration indication, TCI, states.

15. A method for transmitting a configuration indication by a base station, the method comprising

generating an indication for one or more indicated transmission configuration indication, TCI, states based on one or more TCI state groups for the one or more indicated TCI states, to instruct a user equipment, UE, to configure one or more transmission occasions for an uplink or downlink transmission channel based on a pre-configured association between TCI state groups and transmission occasions,

wherein a TCI state group out of the one or more TCI state groups corresponds to one or more spatial directions; and transmitting the indication for one or more indicated transmission configuration indication, TCI, states.

Fig. 1

Fig. 2

Fig. 3

**Enhanced Mobile Broadband**

*Gigabytes in a second*

*3D vide, UHD screens*

**Work and play in the cloud**

**Smart Home/Building**

**Augmented reality**

*Mission critical application e.g. e-health*

**Smart City**

**Industry automation**

**Self Driving Car**

**Massive Machine Type Communication**

**Ultra-reliable and Low Latency Communication**

## Fig. 4

| NSSF | NEF | NRF | PCF | UDM | AF |
|---|---|---|---|---|---|

Nnssf    Nnef    Nnrf    Npcf    Nudm    Naf

Nausf    Namf    Nsmf

| AUSF | AMF | SMF |
|---|---|---|

N1    N2    N4

| UE | (R)AN | UPF | DN |
|---|---|---|---|

N3    N6

N9

## Fig. 5

**Fig. 6**

**600**

| User Equipment 610 | | Base station 660 |
|---|---|---|

Transceiver 620 ◄—————————► Transceiver 670

625 · 675

circuitry 630 · circuitry 680

TCI state configuration circuitry 635 · TCI state configuration circuitry 685

channel 650

635

TCI state group obtaining circuitry 736

Transmission occasion configuration circuitry 737

**Fig. 7**

685

TCI codepoint transmission circuitry 836

TCI state group association circuitry 837

**Fig. 8**

S910: receiving indication for new TCI states

↓

S920: obtaining TCI state groups for new TCI states

↓

S930: configuring transmission occasions based on TCI state groups

## Fig. 9

S1010: generating an indication for new TCI states based on one or more TCI state groups

↓

S1020: transmitting the indication

## Fig. 10

Fig. 11

Current TCI states used by UE:

TCI 1 (Group 0), TCI 2 (Group 0), TCI 3 (Group 1)

gNB indicates new codepoint:
[TCI 5 (Group 0), TCI 8 (Group 0)]

Updated TCI states used by UE:

TCI 5 (Group 0), TCI 8 (Group 0)

# Fig. 12

1310

1320

Configured by RRC

TCI Group index = 0

1311
TCI state 1

1312
TCI state 2

⋮

TCI Group index = 1

TCI state 1
1321

TCI state 2
1322

⋮

**Fig. 13**

| Group 0 | Group 1 | | Group 2 | | Group 3 |
|---------|---------|---|---------|---|---------|
| J/D state 5 | DL state 3 | UL state 7 | DL state 10 | UL state 2 | J/D state 7 |

1400

1410  1420  1421

**Fig. 14**

UE recieves higher layer
configuration from gNB
indicating a list of TCI states — S1510

The UE receives on a DL channel a
new TCI codepoint further selecting a
subset of TCI states from the higher
layer configured list for UL and DL
transmission — S1520

UE identifies the TCI state groups for
the TCI states in the TCI codepoint — S1530

TCI update method: The UE updates the
UL and DL spatial directions — S1540

The UE uses TCI state group
information alongside other higher
layer configuration to map UL or DL
transmissions to single TRP or
multiple TRP transmission with
updated spatial directions — S1550

**Fig. 15**

gNB sends higher layer
configuration to UE indicating
a list of TCI states — S1610

gNB sends on a DL channel a new TCI
codepoint further selecting a subset of
TCI states from the higher layer
configured list for UL and DL
transmission — S1620

gNB establishes one or multiple TRP
connections with the UE using the TCI
codepoint information sent on the DL,
for UL or DL transmission on the
updated spatial directions — S1630

**Fig. 16**

Europäisches
Patentamt

European
Patent Office

Office européen
des brevets

**EUROPEAN SEARCH REPORT**

Application Number

**EP 22 19 9145**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/201695 A1 (LANDIS SHAY [IL] ET AL) 23 June 2022 (2022-06-23) * paragraphs [0094] - [0112], [0151]; figures 4, 11A, 11B * | 1-15 | INV. H04B7/06 H04B7/08 H04W72/23 H04L5/00 |
| X | WO 2022/031546 A1 (IDAC HOLDINGS INC [US]) 10 February 2022 (2022-02-10) * paragraphs [0023], [0074], [0086], [0114], [0158], [0193], [0202] - [0204]; figures 4, 8, 9,10 * | 1,2,4-8, 11-15 | |

TECHNICAL FIELDS
SEARCHED    (IPC)

H04B
H04W
H04L

The present search report has been drawn up for all claims

| Place of search | Date of completion of the search | Examiner |
|---|---|---|
| Munich | 22 February 2023 | Ganis, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 19 9145

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2023

| Patent document cited in search report | | Publication date | Patent family member(s) | | Publication date |
|---|---|---|---|---|---|
| US 2022201695 | A1 | 23-06-2022 | US | 2022201695 A1 | 23-06-2022 |
| | | | WO | 2022140010 A1 | 30-06-2022 |
| WO 2022031546 | A1 | 10-02-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAMSUNG.** Revised WID (work item description): Enhancements on MIMO for NR. *RP-182067,* 20180910